# EUROPEAN PATENT SPECIFICATION

(11) **EP 2 481 948 B1**
(45) Date of publication and mention of the grant of the patent: **11.05.2016**
(21) Application number: 10818757.6
(22) Date of filing: 17.09.2010
(51) Int. Cl.: B60K 6/48, B60W 10/08, B60W 10/113, B60W 10/02, B60W 30/18, B60K 28/16, B60L 11/14, B60L 7/18, B60W 20/00, F16H 3/093

(54) **SHIFT DEVICE FOR VEHICLE**
SCHIEBEVORRICHTUNG FÜR EIN FAHRZEUG
DISPOSITIF DE CHANGEMENT DE VITESSE POUR VÉHICULE

(30) Priority: 24.09.2009 JP 2009218648
(43) Date of publication of application: 01.08.2012
(73) Proprietor: Aisin Seiki Kabushiki Kaisha, Aichi 448-8650 (JP); AISIN AI Co., Ltd., Nishio-shi, Aichi 445-0006 (JP)
(72) Inventor: OMURA, Masahiro, Kariya-shi Aichi 448-8650 (JP); TABATA, Mitsuhiro, Toyota-shi Aichi 471-8571 (JP); FUKUHARA, Yuichi, Nishio-shi Aichi 445-0006 (JP); SASAKI, Kan, Nishio-shi Aichi 445-0006 (JP); TANBA, Toshio, Nishio-shi Aichi 445-0006 (JP)
(74) Representative: Kramer Barske Schmidtchen Patentanwälte PartG mbB
(86) International application number: PCT/JP2010/066172
(87) International publication number: WO 2011/037084

(56) References cited:
- EP-A1- 2 192 013
- JP-A- 2002 234 355
- JP-A- 2004 284 419
- JP-A- 2009 166 611
- US-A1- 2007 202 988
- US-B2- 7 464 616

## Description

### TECHNICAL FIELD

The present invention relates to a vehicle transmission apparatus including a dual clutch transmission that mounts two clutches therein to shift gears, in particular, a vehicle transmission apparatus including a transmission that mounts a motor generator therein.

### BACKGROUND ART

One of conventional transmissions is a semiautomatic transmission that enables automation of a clutch operation in a manual transmission. In a dual clutch transmission (DCT) in the semiautomatic transmission, a driving force from an output shaft of an engine is separated into a transmission path for odd-numbered gears (first speed, third speed, fifth speed and reverse) and a transmission path for even-numbered gears (second speed, fourth speed and sixth speed) and each transmission path is provided with one clutch for transmitting the driving force from the engine. In the dual clutch transmission (DCT), a transmission mechanism on the side where the clutch is engaged drives tires, while a transmission mechanism on the side where the clutch is not engaged prepares for gear shifting, and gear shifting is performed by engaging the clutch of the post-shifting stage while releasing the clutch of the pre-shifting stage. The dual clutch transmission (DCT) has both of direct feeling of a manual transmission (MT) and easiness and smoothness of an automatic transmission (AT), and can shift gears with acceleration feeling without torque drop during gear shifting.

With respect to conventional dual clutch transmission, there is disclosed a dual clutch transmission that includes: two input shafts, two clutches, at least one first driving shaft and at least one second driving shaft, wherein the first input shaft is connectable to the first clutch upon operation therewith and the second input shaft is connectable to the second clutch upon operation therewith, the first driving shaft is disposed below the second driving shaft and above the input shaft, or disposed in vice versa, the input shaft and the driving shaft have gears engaged with each other, at least two gears constitute one shift stage, at least one gear of one shift stage is configured as a displaceable gear that allows both or one of engagement and release, the other gear is advantageously configured as a fixed gear, each of the driving shafts has a driving part gear that transmits rotational force to an axle shaft driving part, and a further shaft is arranged to constitute a reverse shift stage (refer to Patent Literature 1). This literature describes that this transmission enables flexible use and realize a compact configuration.

### PATENT LITERATURE 1

JP Patent Kokai Publication 2007-534899A
EP 2 192 013 A1 discloses in its Fig. 1 a dual clutch transmission having a motor-generator that rotates integrally with one of its two output shafts.

### SUMMARY OF INVENTION

### PROBLEMS TO BE SOLVED BY THE INVENTION

Following analysis is made according to the present invention. However, when one tire drifts on the air and runs idle, the engine speed increases, and when the tire contacts the ground again, a skid or a large behavior of the vehicle occurs, leading to lowering of the driving stability. Especially in the gear shift operation of the dual clutch transmission, the clutch of the side of the post-shifting stage is engaged with the clutch of the pre-shifting stage being partially engaged. For this reason, when one tire drifts on the air and runs idle during gear shifting, due to absence of torque drop during the gear shifting, engine speed increases and a skid or a behavior of the vehicle when the tires contact ground again becomes large, leading to a substantial decrease in the driving stability.

There is a need to provide a vehicle transmission apparatus including a dual clutch transmission capable of improving the driving stability even during driving on the rough road.

### [Solution to Problem]

According to claim 1, a vehicle transmission apparatus includes a first input shaft and a second input shaft, a first output shaft to which rotational power from the first input shaft is transmitted in a gear-shiftable manner, a second output shaft to which rotational power from the second input shaft is transmitted in a gear-shiftable manner, a first clutch that is adapted to interrupt transmission of rotational power from an engine to the first input shaft, a second clutch that is adapted to interrupt transmission of rotational power from the engine to the second input shaft, a first rotational sensor that is adapted to detect number of revolutions of one of two driving wheels differentially driven through a differential device connected to both the first output shaft and the second output shaft to be capable of transmitting rotational power, and a second rotational sensor that is adapted to detect number of revolutions of the other of the two driving wheels. The vehicle transmission apparatus further includes a motor generator that rotates integrally with or in meshing with a predetermined rotational element located closer to an output side than the first clutch and the second clutch, and a controller that controls engagement/disengagement of the first clutch and the second clutch, gear shifting between the first input shaft and the first output shaft and between the second input shaft and the second output shaft, and a regenerative operation of the motor generator according to signals from the first rotational sensor and the second rotational sensor.

According to the present invention, by suppressing a rotational difference between the two driving wheels, for example, during driving on the rough road through regeneration of the motor generator, an increase in engine speed as well as a skid or a large behavior (movement) of the vehicle when the driving wheels contact the ground again can be prevented. As a result, it is possible to improve the driving stability and obtain generative energy.

### BRIEF DESCRIPTION OF DRAWINGS

Fig. 1 is a schematic view showing the configuration of a power transmission apparatus including a transmission in a vehicle transmission apparatus according to a first example of the present invention.
Fig. 2 is a block diagram schematically showing an electronic control system of the vehicle transmission apparatus according to the first example of the present invention.
Fig. 3 is a schematic view showing a power transmission path at the time when a vehicle including the vehicle transmission apparatus according to the first example of the present invention is running at the first-speed stage.
Fig. 4 is a timing chart schematically showing the operation of the vehicle transmission apparatus according to the first example of the present invention.

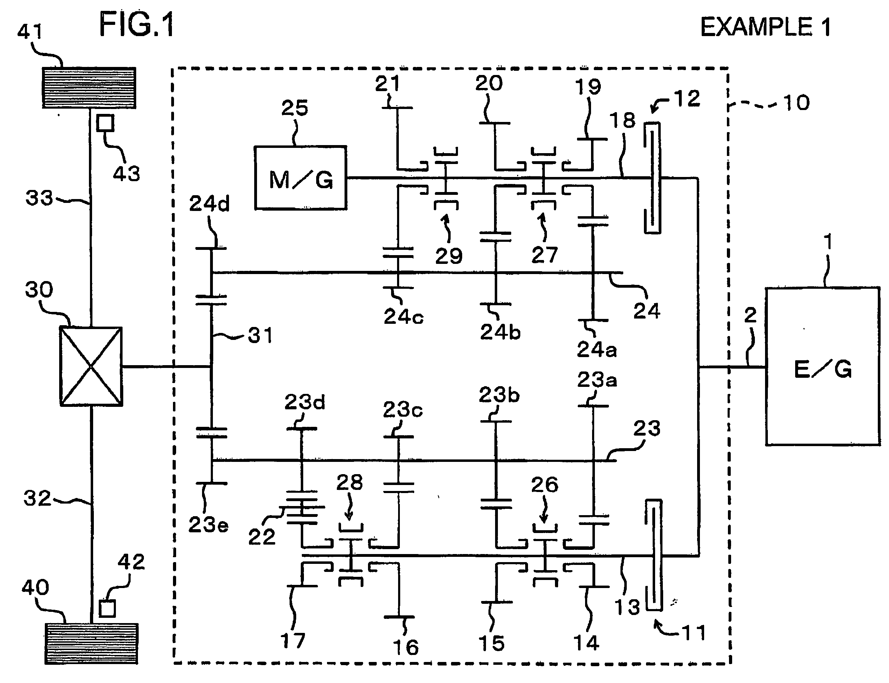

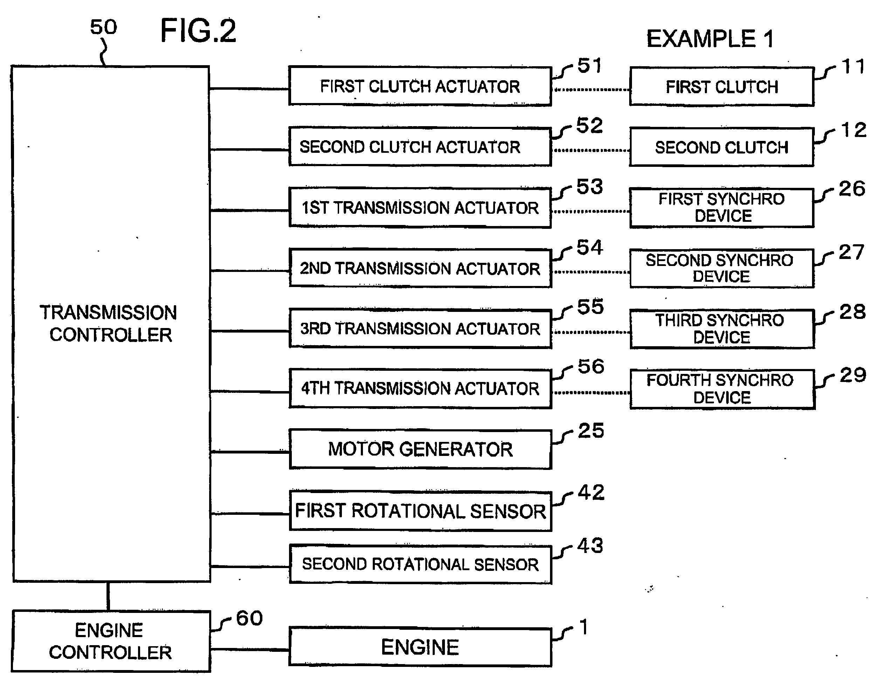

A vehicle transmission apparatus according to an embodiment of the present invention includes a first input shaft (13 in Fig. 1) and a second input shaft (18 in Fig. 1), a first output shaft (23 in Fig. 1) to which rotational power from the first input shaft (13 in Fig. 1) is transmitted in a gear-shiftable manner, a second output shaft (24 in Fig. 1) to which rotational power from the second input shaft (18 in Fig. 1) is transmitted in a gear-shiftable manner, a first clutch (11 in Fig. 1) that interrupts transmission of rotational power from an engine (1 in Fig. 1) to the first input shaft (13 in Fig. 1), a second clutch (12 in Fig. 1) that interrupts transmission of rotational power from the engine (1 in Fig. 1) to the second input shaft (18 in Fig. 1), a first rotational sensor (42 in Fig. 1) that detects a number of revolutions of one of two driving wheels (40, 41 in Fig. 1) differentially driven through a differential device (30 in Fig. 1) connected to both the first output shaft (23 in Fig. 1) and the second output shaft (24 in Fig. 1) so as to transmit rotational power, a second rotational sensor (43 in Fig. 1) that detects a number of revolutions of the other of the two driving wheels (40, 41 in Fig. 1), a motor generator (25 in Fig. 1) that rotates integrally or in meshing with the predetermined rotational element (for example, 13, 18, 23, 24 in Fig. 1) located closer to an output side than the first clutch (11 in Fig. 1) and the second clutch (12 in Fig. 1), and a controller (50 in Fig. 2) that controls engagement/disengagement of the first clutch (11 in Fig. 1) and the second clutch (12 in Fig. 1), gear shifting between the first input shaft (13 in Fig. 1) and the first output shaft (23 in Fig. 1) and between the second input shaft (18 in Fig. 1) and the second output shaft (24 in Fig. 1) and a regenerative operation of the motor generator (25 in Fig. 1) according to signals from the first rotational sensor (42 in Fig. 1) and the second rotational sensor (43 in Fig. 1).

### [First Example]

A vehicle transmission apparatus according to a first example of the present invention will be described below with reference to the accompanying drawings. Fig. 1 is a schematic view showing the configuration of a power transmission apparatus including a transmission in a vehicle transmission apparatus according to the first example of the present invention. Fig. 2 is a block diagram schematically showing an electronic control system of the vehicle transmission apparatus according to the first example of the present invention.

Referring to Fig. 1, the vehicle transmission apparatus is an apparatus including a transmission 10 (dual clutch transmission) that mounts two clutches therein to perform gear-shifting. The vehicle transmission apparatus includes the transmission 10 and the transmission controller 50.

An engine 1 is an internal combustion engine that explosively burns fuel in a cylinder and works by use of its thermal energy (refer to Fig. 1 and Fig. 2). The engine 1 has an injector actuator (not shown) that adjusts the amount of injected fuel and an igniter actuator that adjusts ignition timing of the fuel, and is controlled by an engine controller 60. Rotational power of the engine 1 is transmitted to the first clutch 11 and the second clutch 12 of the transmission 10 through a rotational shaft 2.

The transmission 10 is a dual clutch transmission arranged in a power transmission path between the engine 1 and a differential device 30. The transmission 10 includes a motor generator 25 that rotates integrally with a second input shaft 18. The transmission 10 includes a first clutch 11, a second clutch 12, a first input shaft 13, a first-speed driving gear 14, a third-speed driving gear 15, a fifth-speed driving gear 16, a reverse driving gear 17, a second input shaft 18, a second-speed driving gear 19, a fourth-speed driving gear 20, a sixth-speed driving gear 21, an idler gear 22, a first output shaft 23, a second output shaft 24, the motor generator 25, a first synchro device 26, a second synchro device 27, a third synchro device 28 and a fourth synchro device 29.

The first clutch 11 is a device that interrupts transmission of rotational power from the rotational shaft of the engine 1 to the first input shaft 13. The engagement/disengagement operation of the first clutch 11 is performed by a first clutch actuator 51 whose driving is controlled by a transmission controller 50.

The second clutch 12 is a device that interrupts transmission of rotational power from the rotational shaft of the engine 1 to the second input shaft 18. The engagement/disengagement operation of the second clutch 12 is performed by a second clutch actuator 52 whose driving is controlled by a transmission controller 50.

The first input shaft 13 is a rotational shaft that transmits rotational power to the odd-numbered and reverse driving gears 14 to 17 and is coupled to the first clutch 11. The first-speed driving gear 14, the third-speed driving gear 15, the fifth-speed driving gear 16 and the reverse driving gear 17 are attached to the first input shaft 13 from one side (right side in Fig. 1) so as to be capable of idling. These driving gears 14 to 17 are meshingly coupled to corresponding driven gears 23a to 23c and an idler gear 22.

The second input shaft 18 is a rotational shaft that transmits rotational power to the even-numbered gears 19 to 21, and is coupled to the second clutch 12. The second-speed driving gear 19, the fourth-speed driving gear 20 and the sixth-speed driving gear 21 are attached to the second input shaft 18 from one side (right side in Fig. 1) so as to be capable of idling. These driving gears 19 to 21 are meshingly coupled to driven gears 24a to 24c. The second input shaft 18 is coupled to the rotational shaft of the motor generator 25 so as not to be rotatable relative to the rotational shaft.

The idler gear 22 is a gear that constitutes a reverse speed gear by being meshingly coupled to the reverse driving gear 17 or a reverse driven gear 23d according to a position in the axial direction. The idler gear 22 is neutrally located between the forward speed gears other than the reverse speed gears and is released from coupling, thereby running idle.

The first-speed driven gear 23a, the third-speed driven gear 23b, the fifth-speed driven gear 23c, the reverse driven gear 23d and a driving gear 23e are integrally attached to the first output shaft 23 from one side (right side in Fig. 1). The driven gears 23a to 23c, the reverse driven gear 23d and the driving gear 23e are meshingly coupled to the corresponding driving gears 14 to 16, idler gear 22 and driven gear 31, respectively.

The second-speed driven gear 24a, the fourth-speed driven gear 24b, the sixth-speed driven gear 24c and a driving gear 24d are integrally attached to the second output shaft 24 from one side (right side in Fig. 1). The driven gears 24a to 24c and driving gear 24d are meshingly coupled to the corresponding driving gears 19 to 21 and driven gear 3, respectively.

The motor generator 25 is a synchronous generator-motor that can be driven as both a generator and a motor. A rotational shaft of the motor generator 25 is coupled to the second input shaft 18. Driving of the motor generator 25 is controlled by the transmission controller 50. The rotational shaft of the motor generator 25 is not necessarily coupled to the second input shaft 18 and may rotate integrally with or in meshing with the predetermined rotational element (for example, the first input shaft 13 and the output shafts 23, 24) located closer to the output side than the clutches 11, 12.

The first synchro device 26 is a device that switches-over between the first speed and the third speed. The first synchro device 26 synchronizes the rotational speed of the first input shaft 13 with a rotational speed of the first-speed driving gear 14 or the third-speed driving gear 15 to integrally rotate the first input shaft 13 and the first-speed driving gear 14 or the third-speed driving gear 15. The switching and synchronizing operation of the first synchro device 26 is performed by a first transmission actuator 53, driving of which is controlled by the transmission controller 50.

The second synchro device 27 is a device that switches-over between the second speed and the fourth speed. The second synchro device 27 synchronizes a rotational speed of the second input shaft 18 with a rotational speed of the second-speed driving gear 19 or the fourth-speed driving gear 20 to integrally rotate the second input shaft 18 and the second-speed driving gear 19 or the fourth-speed driving gear 20. The switching-over and synchronizing operation of the second synchro device 27 is performed by a second transmission actuator 54, driving of which is controlled by the transmission controller 50.

The third synchro device 28 is a device that switches-over between the fifth speed and reverse. The third synchro device 28 synchronizes the rotational speed of the first input shaft 13 with the rotational speed of the fifth-speed driving gear 16 or the reverse driving gear 17 to integrally rotate the first input shaft 13 and the fifth-speed driving gear 16 or the reverse driving gear 17. The switching-over and synchronizing operation of the third synchro device 28 is performed by a third transmission actuator 55, driving of which is controlled by the transmission controller 50.

The fourth synchro device 29 is a device that selects the sixth speed. The fourth synchro device 29 synchronizes a rotational speed of the second input shaft 18 with a rotational speed of the sixth-speed driving gear 21 to integrally rotate the second input shaft 18 and the sixth-speed driving gear 21. The selecting and synchronizing operation of the fourth synchro device 29 is performed by a fourth transmission actuator 56, driving of which is controlled by the transmission controller 50.

The differential device 30 is a device that absorbs a difference between right and left shafts 32, 33 in the number of revolutions, enabling smooth rolling driving. The differential device 30 differentially outputs rotational power inputted from the driven gear 31 toward the driving wheels 40, 41 through the shafts 32, 33, respectively.

The rotational sensor 42 is a sensor that detects the number of revolutions (N1) of the shaft 32. The rotational sensor 43 is a sensor that detects the number of revolutions (N2) of the shaft 33. The rotational sensors 42, 43 are electrically connected to the transmission controller 50. Rotational sensors for ABS (Antilock Brake System) may be used as the rotational sensors 42, 43.

The transmission controller 50 is a controller that controls clutch actuators 51, 52, transmission actuators 53 to 56 and the motor generator 25. The transmission controller 50 has a computer function(unit) of performing control according to a program. The transmission controller 50 stores program(s), database(s), map(s) and so on therein. The transmission controller 50 is electrically connected to a shift lever load sensor (not shown) that detects a load (shift lever load) generated when a shift lever (not shown) of the transmission 10 is manipulated, and receives an input of a detection signal. The transmission controller 50 is electrically connected to the rotational sensors 42, 43 that detect the number of revolutions of the shafts 32, 33, respectively, and receives inputs of detection signals. The transmission controller 50 is electrically connected to a gear position sensor (not shown) that detects the actual speed gear (shift position or stage) in the transmission 10, and receives an input of a detection signal. The transmission controller 50 is electrically connected to a transmission input shaft revolution speed sensor (not shown) that detects the number of revolutions of the input shafts 13, 18 of the transmission 10, and receives an input of a detection signal. The transmission controller 50 is electrically connected to an engine revolution speed sensor (not shown) that detects the number of revolutions of the engine 1, and receives an input of a detection signal. The transmission controller 50 collects information on driving states, which is necessary for control, (for example, shift position detected by the shift lever load sensor (not shown), the number of revolutions of the input shafts, which are detected by the transmission input shaft revolution speed sensor (not shown), the number of revolutions of the output shafts, which are detected by an output shaft revolution speed sensor (not shown) and engine speed sent from the engine controller 60) and makes a calculation according to a predefined program to control the clutch actuators 51, 52, the transmission actuators 53 to 56 and the motor generator 25.

The transmission controller 50 controls driving of the first clutch actuator 51, thereby controlling engagement/disengagement of the first clutch 11. The transmission controller 50 controls driving of the second clutch actuator 52, thereby controlling engagement/disengagement of the second clutch 12. The transmission controller 50 controls driving of the first transmission actuator 53, thereby controlling switching-over and synchronization of the first synchro device 26. The transmission controller 50 controls driving of the second transmission actuator 54, thereby controlling switching-over and synchronization of the second synchro device 27. The transmission controller 50 controls driving of the third transmission actuator 55, thereby controlling switching-over and synchronization of the third synchro device 28. The transmission controller 50 controls driving of the fourth transmission actuator 56, thereby controlling selection and synchronization of the fourth synchro device 29. The control operation of the transmission controller 50 will be described hereinafter.

The engine controller 60 is a computer that controls the engine 1. The engine controller 60 collects information on engine working states, which is necessary for control (for example, accelerator opening detected by an accelerator pedal sensor (not shown), engine speed Ne detected by the engine speed sensor (not shown) and ON/OFF state of an ignition switch (not shown), and makes a calculation according to a predefined program to control actuators such as an injector (not shown) and an igniter (not shown). The engine controller 60 is electrically connected to the transmission controller 50 and can supply the information necessary for the transmission controller 50 (engine speed Ne, accelerator opening, etc.) to the transmission controller 50.

In the configuration of the transmission 10 in Fig. 1, synchronization between the input shaft 11 and the driving gears 14 to 17 and between the input shaft 18 and the driving gears 19 to 21 can be achieved, the output shaft 23 is integral with the driven gears 23a to 23d and the output shaft 24 is integral with the driven gears 24a to 24c. However, synchronization between the output shaft 23 and the driven gears 23a to 23d and between the output shaft 24 and the driven gears 24a to 24c may be achieved, while the input shaft 11 may be integral with the driving gears 14 to 17 and the input shaft 18 may be integral with the driving gears 19 to 21.

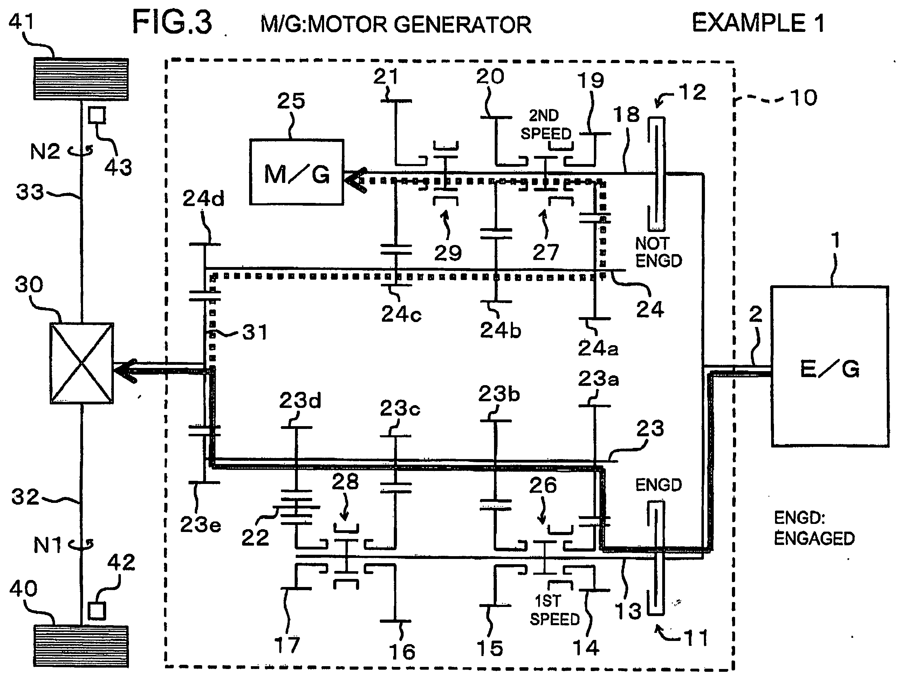

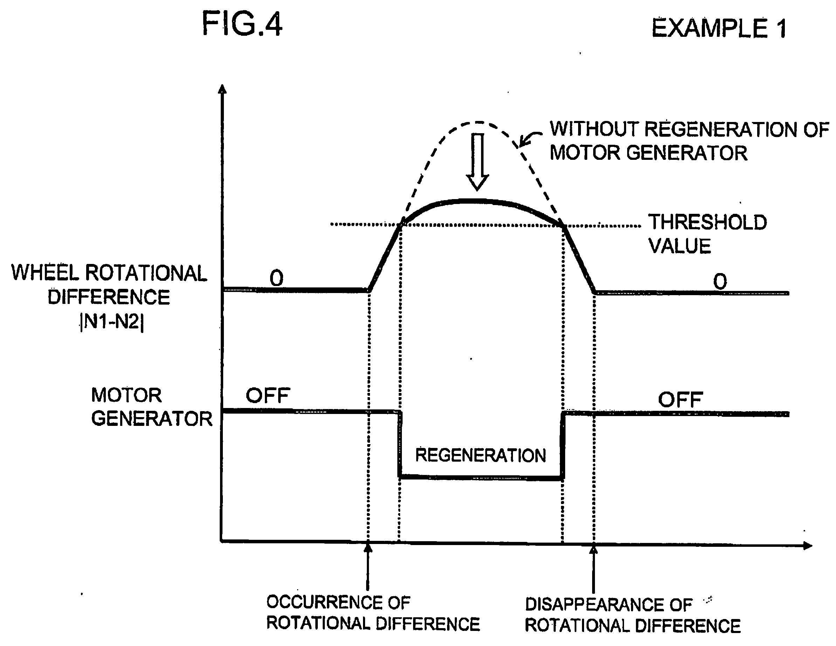

An operation of the vehicle transmission apparatus according to the first example of the present invention will be described below with reference to the accompanying drawings. Fig. 3 is a schematic view showing the power transmission path at the time when a vehicle including the vehicle transmission apparatus according to the first example of the present invention is running at the first-speed stage. Fig. 4 is a timing chart schematically showing the operation of the vehicle transmission apparatus according to the first example of the present invention.

Referring to Fig. 3, for example, when the vehicle including the vehicle transmission apparatus is running at the first-speed stage, the side engaged with the clutch drives tires, while the side disengaged with the clutch prepares for gear shifting. That is, the transmission controller (50 in Fig. 2) controls the first clutch actuator (51 in Fig. 2) so as to engage the first clutch 11, controls the first transmission actuator (53 in Fig. 2) so as to synchronize the first input shaft 13 with the first-speed driving gear 14, controls the second clutch actuator (52 in Fig. 2) so as not to engage the second clutch 12, controls the second transmission actuator (54 in Fig. 2) so as to synchronize the second input shaft 18 with the second-speed driving gear 19, makes the other transmission actuators (55, 56 in Fig. 2) neutral and turns OFF the motor generator 25. As a result, as represented by a thick solid line in Fig. 3, the rotational power (torque) of the engine 1 is transmitted to the rotational shaft, along the first clutch 11, the first input shaft 13, the first synchro device 26, the first-speed driving gear 14, the first-speed driven gear 23a, the first output shaft 23, the driving gear 23e, the driven gear 31, the differential device 30 and the shafts 33, 32 in this order to drive the driving wheels 40, 41. At this time, since the driven gear 31 is meshed with the driving gear 24d, as represented by a thick dotted line in Fig. 3, the rotational power(torque) of the driven gear 31 is transmitted to the driving gear 24d, the second output shaft 24, the second-speed driven gear 24a, the second-speed driving gear 19, the second synchro device 27 and the second input shaft 18 in this order and then, is inputted to the motor generator 25.

When the first-speed gear is shifted to the second-speed gear, the transmission controller (50 in Fig. 2) controls the clutch actuators (51, 52 in Fig. 2) so as to engage the second clutch 12 while releasing the first clutch 11, and after completion of gear shifting, controls the first transmission actuator (53 in Fig. 2) so as to synchronize the first input shaft 13 with the third-speed driving gear 15. Other gear shifting is made in a similar way.

While the vehicle including the vehicle transmission apparatus as shown in Fig. 3 is running at the first-speed gear stage on a road surface with a poor grip of the driving wheels 40, 41, when one of the driving wheels 40, 41 runs idle, a rotational difference between the driving wheels 40, 41 (|N1-N2|) is generated, and the number of revolutions N1 of the driving wheel 40, which is detected by the first rotational sensor 42, and the number of revolutions N2 of the driving wheel 41, which is detected by the second rotational sensor 43, are inputted to the transmission controller (50 in Fig. 2). The transmission controller (50 in Fig. 2) monitors whether or not the rotational difference between the driving wheels 40, 41 (|N1-N2|) is equal to or larger than a threshold value on the basis of the inputted number of revolutions N1, N2. When the |N1-N2| is equal to or larger than the threshold value, the transmission controller (50 in Fig. 2) performs control to regenerate the motor generator 25 (refer to Fig. 4). By regenerating the motor generator 25, rotational power inputted to the differential device 30 can be suppressed, thereby suppressing the rotational difference between the driving wheels 40, 41 (|N1-N2|). When |N1-N2| is smaller than the threshold value, the transmission controller (50 in Fig. 2) turns OFF the motor generator 25. Since the rotational power is inputted to the motor generator 25 at any speed gear stage and even during gear shifting, the transmission controller (50 in Fig. 2) can perform regenerative control of the motor generator 25.

According to the first example, by suppressing occurrence of the rotational difference between the driving wheels 40, 41, for example, during driving on a rough road, through regeneration of the motor generator 25, an increase in engine speed as well as a skid or a large behavior (movement) of the vehicle when the driving wheels 40, 41 contact the ground again can be prevented. As a result, it becomes possible to improve driving stability and obtain regenerative energy. In addition, through suppressing the rotational difference between the driving wheels 40, 41 by regenerating the motor generator 25 rather than by controlling the engine 1, more rapid stabilization can be achieved.

### EXPLANATIONS OF REFERENCE SIGNS

- 1: Engine
- 2: Rotational shaft
- 10: Transmission
- 11: First clutch
- 12: Second clutch
- 13: First input shaft
- 14: First-speed driving gear
- 15: Third-speed driving gear
- 16: Fifth-speed driving gear
- 17: Reverse driving gear
- 18: Second input shaft
- 19: Second-speed driving gear
- 20: Fourth-speed driving gear
- 21: Sixth-speed driving gear
- 22: Idler gear
- 23: First output shaft
- 23a: First-speed driven gear
- 23b: Third-speed driven gear
- 23c: Fifth-speed driving gear
- 23d: Reverse driving gear
- 23e: Driving gear
- 24: Second output shaft
- 24a: Second-speed driven gear
- 24b: Fourth-speed driven gear
- 24c: Sixth-speed driven gear
- 24d: Driving gear
- 25: Motor generator
- 26: First synchro device
- 27: Second synchro device
- 28: Third synchro device
- 29: Fourth synchro device
- 30: Differential device
- 31: Driven gear
- 32, 33: Shaft
- 40, 41: Driving wheel
- 42, 43: Rotational sensor
- 50: Transmission controller
- 51: First clutch actuator
- 52: Second clutch actuator
- 53: First transmission actuator
- 54: Second transmission actuator
- 55: Third transmission actuator
- 56: Fourth transmission actuator
- 60: Engine controller

## Claims

1. A vehicle transmission apparatus, comprising:
a first input shaft (13) and a second input shaft (18);
a first output shaft (23) to which rotational power from the first input shaft (13) is transmitted in a gear-shiftable manner;
a second output shaft (24) to which rotational power from the second input shaft (18) is transmitted in a gear-shiftable manner;
a first clutch (11) that is adapted to interrupt transmission of rotational power from an engine (1) to the first input shaft (13);
a second clutch (12) that is adapted to interrupt transmission of rotational power from the engine (1) to the second input shaft (18);
a first rotational sensor(42) that is adapted to detect number of revolutions of one of two driving wheels (40, 41) differentially driven through a differential device (30) connected to both the first output shaft (23) and the second output shaft (24) to be capable of transmitting rotational power;
a second rotational sensor (43) that is adapted to detect number of revolutions of the other of the two driving wheels (40, 41);
a motor generator (25) that rotates integrally with or in meshing with a predetermined rotational element (13, 18, 28, 24) located closer to an output side than the first clutch (11) and the second clutch (12); and
a controller (50) that controls engagement/disengagement of the first clutch (11) and the second clutch (12), gear shifting between the first input shaft (13) and the first output shaft (23) and between the second input shaft (18) and the second output shaft (24), and a regenerative operation of the motor generator (25) according to signals from the first rotational sensor and the second rotational sensor.

2. The vehicle transmission apparatus according to claim 1, wherein a rotational shaft (2) of the motor generator (25) is coupled to the first input shaft (13) or the second input shaft (18).

3. The vehicle transmission apparatus according to claim 1 or 2, wherein the first rotational sensor (42) and the second rotational sensor (43) each are a rotational sensor for an antilock brake system.

4. The vehicle transmission apparatus according to any one of claims 1 to 3, wherein the controller (50) performs control to regenerate the motor generator (25) when an absolute difference between a first number of revolutions detected by the first rotational sensor (42) and a second number of revolutions detected by the second rotational sensor (43) is equal to or larger than a preset threshold value.

5. The vehicle transmission apparatus according to any one of claims 1 to 4, further comprising:
a plurality of first fixed gears fixed to one of the first input shaft (13) and the first output shaft (23);
a plurality of first displaceable gears that are arranged so as to rotate relative to the other of the first input shaft (13) and the first output shaft (23), and engage with the corresponding first fixed gears, respectively;
a plurality of first synchro devices (26) configured to synchronize the first displaceable gears with the other of the first input shaft (13) and the first output shaft (23);
a plurality of second fixed gears fixed to one of the second input shaft (18) and the second output shaft (24);
a plurality of second displaceable gears that are arranged so as to rotate relative to the other of the second input shaft (18) and the second output shaft (24), and engage with the corresponding second fixed gears, respectively; and
a plurality of second synchro devices (27) configured to synchronize the second displaceable gear with the other of the second input shaft (18) and the second output shaft (24), wherein
the controller (50) controls synchronization of the first synchro device (26) and the second synchro device (27).

## Patentansprüche

1. Fahrzeuggetriebevorrichtung, enthaltend:
eine erste Eingangswelle (13) und eine zweite Eingangswelle (18);
eine erste Ausgangswelle (23), auf die eine Drehkraft von der ersten Eingangswelle (13) auf eine Gang-schaltbare Art und Weise übertragen wird;
eine zweite Ausgangswelle (24), auf die eine Drehkraft von der zweiten Eingangswelle (18) auf eine Gang-schaltbare Art und Weise übertragen wird;
eine erste Kupplung (11), die angepasst ist zum Unterbrechen einer Übertragung der Drehkraft von einem Motor (1) auf die erste Eingangswelle (13);
eine zweite Kupplung (12), die angepasst ist zum Unterbrechen einer Übertragung der Drehkraft von dem Motor (1) auf die zweite Eingangswelle (18);
einen ersten Drehsensor (42), der angepasst ist zum Ermitteln einer Anzahl von Umdrehungen von einem aus zwei Antriebsrädern (40, 41), die über eine Differentialeinrichtung (30) unterschiedlich angetrieben werden, die sowohl mit der ersten Ausgangswelle (23) als auch der zweiten Ausgangswelle (24) verbunden ist, so dass sie zum Übertragen einer Drehkraft geeignet ist;
einen zweiten Drehsensor (43), der angepasst ist zum Ermitteln einer Anzahl von Umdrehungen des anderen aus den zwei Antriebsrädern (40, 41);
einen Motorgenerator (25), der sich integral mit oder durch Kämmen mit einem vorgegebenen Drehelement (13, 18, 28, 24) dreht, das sich näher an der Ausgangsseite als die erste Kupplung (11) und die zweite Kupplung (12) befindet; und
eine Steuerung (50), die einen Eingriff/ein Lösen der ersten Kupplung (11) und der zweiten Kupplung (12), ein Gangschalten zwischen der ersten Eingangswelle (13) und der ersten Ausgangswelle (23) und zwischen der zweiten Eingangswelle (18) und der zweiten Ausgangswelle (24) und einen regenerativen Betrieb des Motorgenerators (25) gemäß Signalen von dem ersten Drehsensor und dem zweiten Drehsensor steuert.

2. Fahrzeuggetriebevorrichtung nach Anspruch 1, wobei eine Drehwelle (2) des Motorgenerators (25) mit der ersten Eingangswelle (13) oder der zweiten Eingangswelle (18) gekoppelt ist.

3. Fahrzeuggetriebevorrichtung nach Anspruch 1 oder 2, wobei der erste Drehsensor (42) und der zweite Drehsensor (43) jeweils ein Drehsensor für ein Antiblockiersystem ist.

4. Fahrzeuggetriebevorrichtung nach einem der Ansprüche 1 bis 3, wobei die Steuerung (50) eine Steuerung zum Regenerieren des Motorgenerators (25) durchführt, wenn ein absoluter Unterschied zwischen einer ersten Anzahl von Umdrehungen, die von dem ersten Drehsensor (42) ermittelt wird, und eine zweite Anzahl von Umdrehungen, die von dem zweiten Drehsensor (43) ermittelt wird, gleich oder größer als ein vorbestimmter Schwellenwert ist.

5. Fahrzeuggetriebevorrichtung nach einem der Ansprüche 1 bis 4, ferner enthaltend:
mehrere erste befestigte Zahnräder, die an einer aus der ersten Eingangswelle (13) und der ersten Ausgangswelle (23) befestigt sind;
mehrere erste verlagerbare Zahnräder, die derart angeordnet sind, dass sie sich relativ zu der anderen aus der ersten Eingangswelle (13) und der ersten Ausgangswelle (23) drehen bzw. die mit den entsprechenden ersten befestigten Zahnrädern in Eingriff sind;
mehrere erste Synchroneinrichtungen (26), die ausgebildet sind zum Synchronisieren der ersten verlagerbaren Zahnräder mit der anderen aus der ersten Eingangswelle (13) und der ersten Ausgangswelle (23);
mehrere zweite befestigte Zahnräder, die an einer aus der zweiten Eingangswelle (18) und der zweiten Ausgangswelle (24) befestigt sind;
mehrere zweite verlagerbare Zahnräder, die derart angeordnet sind, dass sie sich relativ zu der anderen aus der zweiten Eingangswelle (18) und der zweiten Ausgangswelle (24) drehen bzw. die mit den entsprechenden zweiten befestigten Zahnrädern in Eingriff sind; und
mehrere zweite Synchroneinrichtungen (27), die ausgestaltet sind zum Synchronisieren der zweiten verlagerbaren Zahnräder mit der anderen aus der zweiten Eingangswelle (18) und der zweiten Ausgangswelle (24), wobei
die Steuerung (50) die Synchronisierung der ersten Synchroneinrichtung (26) und der zweiten Synchroneinrichtung (27) steuert.

## Revendications

1. Appareil de transmission de véhicule, comprenant :
un premier arbre d'entrée (13) et un deuxième arbre d'entrée (18) ;
un premier arbre de sortie (23) auquel une puissance rotationnelle provenant du premier arbre d'entrée (13) est transmise de manière à pouvoir changer de vitesse ;
un deuxième arbre de sortie (24) auquel une puissance rotationnelle provenant du deuxième arbre d'entrée (18) est transmise de manière à pouvoir changer de vitesse ;
un premier embrayage (11) qui est apte à interrompre une transmission d'une puissance rotationnelle d'un moteur (1) au premier arbre d'entrée (13) ;
un deuxième embrayage (12) qui est apte à interrompre une transmission d'une puissance rotationnelle du moteur (1) au deuxième arbre d'entrée (18) ;
un premier capteur de rotation (42) qui est apte à détecter un nombre de tours de l'une de deux roues motrices (40, 41) entraînées différentiellement par l'intermédiaire d'un dispositif différentiel (30) relié au premier arbre de sortie (23) et au deuxième arbre de sortie (24) afin d'être capable de transmettre une puissance rotationnelle ;
un deuxième capteur de rotation (43) qui est apte à détecter un nombre de tours de l'autre des deux roues motrices (40, 41) ;
un générateur de moteur (25) qui tourne solidairement ou par engrènement avec un élément rotationnel prédéterminé (13, 18, 28, 24) situé plus près d'un côté de sortie que le premier embrayage (11) et le deuxième embrayage (12) ; et
un organe de commande (50) qui commande la mise en prise/hors prise du premier embrayage (11) et du deuxième embrayage (12), le changement de vitesse entre le premier arbre d'entrée (13) et le premier arbre de sortie (23) et entre le deuxième arbre d'entrée (18) et le deuxième arbre de sortie (24), et une opération régénératrice du générateur de moteur (25) en fonction de signaux provenant du premier capteur de rotation et du deuxième capteur de rotation.

2. Appareil de transmission de véhicule selon la revendication 1, dans lequel un arbre de rotation (2) du générateur de moteur (25) est couplé au premier arbre d'entrée (13) ou au deuxième arbre d'entrée (18).

3. Appareil de transmission de véhicule selon la revendication 1 ou 2, dans lequel chacun du premier capteur de rotation (42) et du deuxième capteur de rotation (43) est un capteur de rotation pour un système de freinage antiblocage.

4. Appareil de transmission de véhicule selon l'une quelconque des revendications 1 à 3, dans lequel l'organe de commande (50) effectue une commande pour régénérer le générateur de moteur (25) lorsqu'une différence absolue entre un premier nombre de tours détectés par le premier capteur de rotation (42) et un deuxième nombre de tours détectés par le deuxième capteur de rotation (43) est supérieure ou égale à une valeur de seuil préréglée.

5. Appareil de transmission de véhicule selon l'une quelconque des revendications 1 à 4, comprenant en outre :
une pluralité de premiers engrenages fixes fixés à l'un du premier arbre d'entrée (13) et du premier arbre de sortie (23) ;
une pluralité de premiers engrenages déplaçables qui sont agencés de manière à tourner par rapport à l'autre du premier arbre d'entrée (13) et du premier arbre de sortie (23), et à se mettre en prise respectivement avec les premiers engrenages fixes correspondants ;
une pluralité de premiers dispositifs de synchronisation (26) configurés pour synchroniser les premiers engrenages déplaçables avec l'autre du premier arbre d'entrée (13) et du premier arbre de sortie (23) ;
une pluralité de deuxièmes engrenages fixes fixés à l'un du deuxième arbre d'entrée (18) et du deuxième arbre de sortie (24) ;
une pluralité de deuxièmes engrenages déplaçables qui sont agencés de manière à tourner par rapport à l'autre du deuxième arbre d'entrée (18) et du deuxième arbre de sortie (24), et à se mettre en prise respectivement avec les deuxièmes arbres fixes correspondants ; et
une pluralité de deuxièmes dispositifs de synchronisation (27) configurés pour synchroniser le deuxième engrenage déplaçable avec l'autre du deuxième arbre d'entrée (18) et du deuxième arbre de sortie (24), dans lequel
l'organe de commande (50) commande une synchronisation du premier dispositif de synchronisation (26) et du deuxième dispositif de synchronisation (27).
